# EUROPÄISCHE PATENTSCHRIFT

(11) **EP 0 558 132 B1**
(45) Veröffentlichungstag und Bekanntmachung des Hinweises auf die Patenterteilung: **06.05.1998**
(21) Anmeldenummer: 93200477.3
(22) Anmeldetag: 19.02.1993
(51) Int. Cl.: G06K 19/073

(54) **Anordnung zum Datenaustausch**
Data exchange arrangement
Disposition d'échange de données

(30) Priorität: 22.02.1992 DE 4205567
(43) Veröffentlichungstag der Anmeldung: 01.09.1993
(73) Patentinhaber: Philips Patentverwaltung GmbH, 22335 Hamburg (DE); Philips Electronics N.V., 5621 BA Eindhoven (NL)
(72) Erfinder: Drews, Steffen, Dr., W-20097 Hamburg (DE); Timm, Volker, Dr., W-20097 Hamburg (DE); Tobergte, Volker, Dr., W-20097 Hamburg (DE); Axer, Klaus, Dr., W-20097 Hamburg (DE)
(74) Vertreter: Poddig, Dieter, Dipl.-Ing.

(56) Entgegenhaltungen:
- DE-C- 2 512 935
- FR-A- 2 600 446
- US-A- 4 211 919
- US-A- 4 734 568
- PATENT ABSTRACTS OF JAPAN, Band 14, Nr. 50 (P-998), 1990; & JP - A - 1277948

## Beschreibung

Die Erfindung betrifft eine Anordnung zum Datenaustausch zwischen einem Terminal und einem damit verbundenen Datenträger, der einen in mehrere Blöcke mit je mehreren Speicherplätzen unterteilten Schreib-Lese-Speicher und ferner Steuer- und Adressierungsanordnungen und Sperranordnungen enthält, die das Auslesen aus dem Speicher und/oder das Einschreiben in den Speicher in Abhängigkeit von gespeicherten, jeweils einem Block zugeordneten getrennten Lese- und Schreib-Sperrinformationen verhindern bzw. freigeben, wobei der Datenträger vor einem Speicherzugriff zunächst mit dem Terminal gekoppelt wird, das den Datenaustausch mit dem Datenträger in Zusammenwirkung mit diesem steuert, sowie einen Datenträger für eine solche Anordnung und eine integrierte Schaltung für einen solchen Datenträger.

Ein derartige Anordnung ist bekannt aus der US-PS 47 34 568. Darin ist der Speicher in mehrere Bereiche eingeteilt, deren Grenzen festliegen. Einer der Bereiche dient zum Speichern der während der Benutzung anfallenden Daten. Dieser Bereich enthält einen Abschnitt mit Indexdaten sowie eine Anzahl von Blöcken mit je mehreren Speicherplätzen. Jedem Block ist ein Indexdatenfeld zugeordnet, das den Anfang und das Ende dieses Blocks, Sperrinformationen für diesen Block und weitere Daten enthält. Die Sperrinformationen für jeden Block sind nach Lese-Sperrinformationen und Schreib-Sperrinformationen getrennt, wobei jede dieser Informationen mehrere Bit umfaßt, um verschiedene Bedingungen angeben zu können, unter denen eine Schreibsperre bzw. eine Lesesperre ggf. aufgehoben werden kann. Es ist jedoch nicht angegeben, wann und wie die Indexdaten eingeschrieben werden, jedoch sind diese grundsätzlich bei Verwendung beispielsweise eines EEPROM als Speicher später überschreibbar. Damit können jedoch Schreib- und Lesesperren auch nachträglich aufgehoben werden, indem die entsprechenden Indexdaten überschrieben werden. Damit ist mißbräuchliches Schreiben und Lesen möglich.

In der US-PS 4,211,919 ist ein Datenträger mit einem Speicher beschrieben, bei dem der Speicherbereich in drei Zonen eingeteilt ist. In der ersten Zone sind Daten enthalten, die geheim sind und nicht ausgelesen werden, sondern nur innerhalb des Datenträgers verwendet werden, und die auch nicht überschrieben werden können. Die zweite Zone ist frei zum Schreiben und Lesen von bzw. nach außerhalb, wobei zum Schreiben und zum Lesen in diesem Bereich abhängig von bestimmten Schutzinformationen vorher richtige Schlüsselwörter übertragen werden müssen. Diese Schlüsselinformationen sind im dritten Teil des Datenträgers enthalten, in den kein Einschreiben, sondern aus dem lediglich ein Auslesen möglich ist. Die Grenzadressen für die einzelnen Zonen sind ebenfalls in der dritten Zone enthalten und können nach dem Initialisieren des Datenträgers nicht mehr verändert werden.

Aufgabe der Erfindung ist es daher, eine Anordnung der eingangs genannten Art anzugeben, bei dem die gegen das Lesen oder das Schreiben gesperrten Blöcke des Speichers flexibel vom Anwender an verschiedene Anwendungsfälle angepaßt und wahlweise auch nachträglich verändert werden können, wobei dennoch eine hohe Sicherheit gegen mißbräuchliches Lesen oder Schreiben gegeben ist.

Diese Aufgabe wird erfindungsgemäß durch die Anordnung laut Anspruch 1 gelöst. Erste Speicherplätze eines Blocks für blockweise SchreibSperrinformation, zweite Speicherplätze eines Blocks für blockweise Lese-Sperrinformation und dritte Speicherplätze eines Blockes für ein Paßwort sind vorgesehen und das Schreiben in nicht gesperrte Blöcke wird, abhängig von einem in einem vierten Speicherplatz im Speicher gespeicherten Modusbit nach Übertragung einer Paßinformation zum Datenträger und erfolgreichem Vergleich dieser übertragenen Paßinformation mit einem gespeichertem Paßwort, freigegeben.

Auf diese Weise sind die Bereiche des Speichers, die gegen das Lesen und Schreiben gesperrt sind, ebenfalls durch Informationen bestimmt, die im Speicher selbst enthalten sind. Durch die Einteilung des Speichers in einzelne Blöcke und dadurch, daß die Sperrinformationen für das Lesen und für das Schreiben jeweils zusammenhängen, jedoch getrennt voneinander im Speicher vorgesehen werden, ist zusammen mit dem Paßwort der Datenträger sehr flexibel verwendbar. In dem einen Extremfall, wenn durch einen entsprechenden Wert des Modusbits die Paßinformation für das Schreiben nicht notwendig ist, kann der Datenträger beliebig eingeschrieben und ausgelesen werden, denn eine gegebenenfalls vorhandene Schreib-Sperrinformation kann dann überschrieben werden. Dies ist jedoch nicht bei dem anderen Wert des Modusbits möglich, sondern dann ist nur ein Lesen möglich, und zwar nur aus nicht gesperrten Blöcken. Falls jedoch das Paßwort bekannt ist, kann auch beliebig eingeschrieben und ausgelesen werden, indem eine etwa vorhandene Sperrinformation dafür vorher überschrieben wird. Auch eine Veränderung der Angabe der Blöcke, die ohne Kenntnis des Paßwortes auslesbar sind, ist mit Kenntnis des Paßwortes möglich. Es ist jedoch auch möglich, den Block gegen Überschreiben zu sperren, der die Schreib-Sperrinformation selbst enthält. In diesem Falle kann die Aufteilung in Blöcke, die überschrieben werden können, und in Blöcke, die quasi Festwertspeicher darstellen, dann auch bei Kenntnis des Paßwortes nicht mehr geändert werden. Das Schreiben in nicht gesperrte Bereiche ist jedoch weiterhin nur mit Kenntnis des Paßwortes möglich, während nicht gegen Auslesen gesperrte Bereiche in jedem Falle ausgelesen werden können.

Eine noch flexiblere Verwendungsmöglichkeit ist gegeben, wenn nach einer Ausgestaltung der erfindungsgemäßen Anordnung die ersten Speicherplätze in einem ersten Block und die zweiten Speicherplätze in einem anderen, zweiten Block vorgesehen sind. Dabei wird das Auslesen ohne Kenntnis des Paßwortes auf die Blöcke beschränkt, die durch die Lese-Sperrinformation in den zweiten Speicherplätzen im zweiten Block bestimmt werden, während ein vollständiges Auslesen des Speichers bei Kenntnis des Paßwortes möglich ist, indem die Lese-Sperrinformation im zweiten Block entsprechend überschrieben wird. Insbesondere wenn der erste Block gegen Überschreiben gesperrt ist, kann das Auslesen ohne Paßwort beispielsweise auf einzelne von den Blöcken beschränkt werden, die gegen Überschreiben geschützt sind, während mit Kenntnis des Paßwortes in nicht schreibgesperrte Blöcke geschrieben und aus allen Blöcken ausgelesen werden kann. Diese oder eine andere Aufteilung kann abhängig von dem jeweiligen Anwendungsfall vom Benutzer gewählt und ohne besondere Maßnahmen, sondern nur durch ganz normales Einschreiben eingestellt werden.

Die Sperr-Information für das Schreiben und für das Lesen kann beispielsweise aus je einer eigenen Information, im einfachsten Fall aus einem Bit an einer vorgegebenen Stelle für jeden Block getrennt vorhanden sein. Da das Lesen jedoch allgemein sequentiell erfolgt, ist es nach einer weiteren Ausgestaltung der erfindungsgemäßen Anordnung zweckmäßig, daß in den zweiten Speicherplätzen die Nummer eines ersten nicht für das Lesen gesperrten Blocks und die Nummer eines letzten nicht für das Lesen gesperrten Blocks gespeichert ist und diese Blöcke sowie die dazwischen liegenden Blöcke bei einem Lesevorgang ausgelesen werden. Dies erfordert wenig Verwaltungsaufwand bei der Überprüfung, ob ein Block gegen Auslesen gesperrt ist, denn auf diese Weise entsteht ein zusammenhängender Abschnitt aus allgemein mehreren Blöcken, der ohne weiteres ausgelesen wird.

Die dritten Speicherplätze für das Paßwort können in irgendeinem Block vorgesehen werden. Grundsätzlich kann nämlich ein vorhandenes Paßwort auch durch ein neues Paßwort überschrieben werden, wenn das vorhandene Paßwort bekannt ist. Diese Möglichkeit, das Paßwort überschreibbar zu lassen, kann dadurch gesperrt werden, daß der das Paßwort enthaltende Block gegen Überschreiben gesperrt wird. Dies ist jedoch nur dann sinnvoll, wenn gleichzeitig der Block, der die Schreib-Sperrinformation enthält, ebenfalls gegen Überschreiben gesperrt wird. Es ist daher nach einer weiteren Ausgestaltung der erfindungsgemäßen Anordnung zweckmäßig, daß die dritten Speicherplätze für das Paßwort und der vierte Speicherplatz für das Modusbit im ersten Block vorgesehen sind. Dadurch können dann die übrigen Blöcke freizügiger verwendet werden.

Nach dem Koppeln des Datenträgers mit dem Terminal kann der Austausch von Daten dazwischen auf verschiedene Weise begonnen werden. Eine vorteilhafte Ausgestaltung der Erfindung besteht darin, daß die Steueranordnungen nach dem Koppeln des Datenträgers mit dem Terminal zunächst den Inhalt nicht für das Lesen gesperrter Blöcke zyklisch wiederholt lesen und zum Terminal übertragen und nach der Übertragung jeweils eines Blockes eine Pause einfügen, in der das Terminal bei Vorliegen von in den Datenträger einzuschreibenden Daten ein vorgegebenes Schreibanforderungssignal zum Datenträger überträgt, wodurch die Steueranordnungen den Lese- und Übertragungsvorgang vom Datenträger zum Terminal beenden und den Datenträger zum Empfang von einzuschreibenden Daten vorbereiten. Auf diese Weise wird sofort eine Aktion gestartet, ohne daß ein vorhergehender Austausch von Befehlen zwischen Datenträger und Terminal erforderlich ist, wobei das Auslesen des Datenträgers und Übertragen zum Terminal zunächst der wichtigere Vorgang ist, damit seitens des Terminals zunächst der Datenträger beispielsweise geprüft werden kann und abhängig von dem Prüfungsergebnis und weiterem Inhalt des Datenträgers ein bestimmter nachfolgender Schreibvorgang ausgewählt werden kann. Dieser Schreibvorgang kann nach dem Lesen eines beliebigen Blocks gestartet werden, da nach jedem gelesenen Block eine Pause eingefügt ist, so daß praktisch keine Wartezeiten beim Schreiben entstehen.

Um bereits beim Lesen zu bestimmen, welche Blöcke ausgelesen werden dürfen, noch mehr aber, welche Blöcke überschrieben werden dürfen und ob dafür die vollständige Paßinformation erforderlich ist, ist es nach einer weiteren Ausgestaltung der erfindungsgemäßen Anordnung zweckmäßig, daß die Steueranordnungen vor einem Schreibvorgang und vor einem Lesevorgang zunächst die vollständige Schreib-Sperrinformation bzw. die vollständige Lese-Sperrinformation sowie das Modusbit aus dem Speicher auslesen. Dadurch kann dann insbesondere bei einem Schreibversuch auf dem Datenträger sehr schnell an das Terminal gemeldet werden, ob dies möglich ist oder ob es einen gesperrten Block betrifft.

Der Wert des Modusbits bestimmt, ob vor dem Schreiben die vollständige Paßinformation übertragen werden muß oder nicht. Dies ist zunächst im Terminal nicht ohne weiteres bekannt, wenn diese Information nicht vorher aus dem Datenträger ausgelesen worden ist. Vom Terminal kann daher unabhängig von der Kenntnis des Modusbits zunächst die Paßinformation vorsorglich übertragen werden, die als richtig angenommen wird. Wenn der gekoppelte Datenträger jedoch tatsächlich gemäß dem entsprechenden ausgelesenen Binärwertes des Modusbits keine vollständige Paßinformation zum Schreiben benötigt, ist es zweckmäßig, daß die Sperranordnungen bei dem einen binären Wert des ausgelesenen Modusbits das Schreiben in nicht gesperrte Blöcke unabhängig von der übertragenen Paßinformation freigeben. Die vom Terminal übertragene Paßinformation wird also vom Datenträger nicht beachtet, und die weiteren Vorgänge laufen ab, als wäre keine Paßinformation übertragen worden. Dies kann unmittelbar dadurch gesteuert werden, daß die mit der Paßinformation übertragene Modusinformation mit dem Modusbit verglichen wird.

Bei diesem Vergleich können vier verschiedene Kombinationen auftreten. Sofern die Modusinformation mit dem gespeicherten Modusbit übereinstimmt, ergeben sich keine weiteren Schwierigkeiten. Wenn dies jedoch nicht der Fall ist, sollte der Vergleich dennoch einen eindeutig definierten Ablauf auslösen. Hierzu ist es nach einer weiteren Ausgestaltung der erfindungsgemäßen Anordnung zweckmäßig, daß das Terminal zu Beginn eines Schreibvorgangs in den Speicher des Datenträgers zunächst eine Modus information zum Datenträger überträgt und die Sperranordnungen diese dort mit dem Modusbit vergleichen und bei Nichtübereinstimmung im Fall, daß das Modusbit den einen binären Wert und die Modus information den anderen binären Wert hat, eine nachfolgend übertragene Paßinformation in dem Datenträger nicht auswerten und in dem Fall, daß das Modusbit den anderen binären Wert und die Modusinformation den einen binären Wert hat, die Steueranordnungen ansteuern, um den der Schreibvorgang unmittelbar abzubrechen. Damit erfolgt auch im letzten Fall, der zunächst als unauflösbarer Konflikt erscheint, eine eindeutige Reaktion, wobei der Schreibvorgang z.B. dadurch abgebrochen werden kann, daß von dem Datenträger wieder wie beim erstmaligen Koppeln die nicht gegen Lesen gesperrten Blöcke zyklisch wiederholt ausgelesen und zum Terminal übertragen werden.

Ein ähnlicher Konflikt entsteht, wenn ein falsches Paßwort übertragen wird. Eine weitere Ausgestaltung der erfindungsgemäßen Anordnung ist daher dadurch gekennzeichnet, daß die Sperranordnungen bei dem anderen Wert des Modusbits und der Modusinformation bei Nichtübereinstimmung der Paßinformation und des gespeicherten Paßwortes die Steueranordnungen ansteuern, um den Schreibvorgang unmittelbar abzubrechen. Auch hier kann der Datenträger beim Abbruch des Schreibvorgangs in den Lesezustand gehen und Informationen an das Terminal senden.

Eine weitere Ausgestaltung der erfindungsgemäßen Anordnung ist dadurch gekennzeichnet, daß im Datenträger die Adressieranordnung jeweils einen Block von Speicherplätzen im Speicher sowie innerhalb eines Blocks einen Speicherplatz adressiert, daß die Sperranordnungen ein Register, das den Inhalt vorgegebener erster Speicherplätze eines Blocks und den Inhalt vorgegebener zweiter Speicherplätze eines Blocks aufnimmt, einen ersten Vergleicher, der die von der Adressieranordnung abgegebene Blockadresse mit dem Inhalt des Registers vergleicht und abhängig vom Vergleichsergebnis ein erstes Ausgangssignal erzeugt, das das Lesen eines Blocks unterdrückt bzw. freigibt und für das Schreiben in einem Block verwendet wird, und einen zweiten Vergleicher umfassen, der ein aus dritten Speicherplätzen eines Blocks ausgelesenes Paßwort mit einem vom Terminal zugeführtes Paßwort vergleicht und abhängig vom Vergleichsergebnis ein zweites Ausgangssignal erzeugt, daß ein zweites Register vorgesehen ist, das den Inhalt eines vierten Speicherplatzes aufnimmt und ein drittes Ausgangssignal erzeugt, und daß die Steueranordnung das erste, zweite und dritte Ausgangssignal empfängt und davon abhängig das Einschreiben von Information in Blöcke des Speichers sperrt bzw. freigibt. Diese Realisierung erfordert nur einen geringen Aufwand und ergibt einen vielseitig verwendbaren Datenträger.

Ein Datenträger für die erfindungsgemäße Anordnung zum Koppeln mit einem Terminal sowie eine integrierte Schaltung zum Einbau in einen solchen Datenträger sind in den übrigen Unteransprüchen gekennzeichnet.

Ausführungsbeispiele der Erfindung werden nachstehend anhand der Zeichnung näher erläutert. Es zeigen
Fig. 1 schematisch eine drahtlose Kopplung zwischen Datenträger und Terminal mit den wichtigsten Elementen darin,
Fig. 2 blockschematisch den Aufbau der Zugriffsteuerung im Datenträger,
Fig. 3 den Aufbau des Speicherinhalts aus Blöcken mit der Zuordnung bestimmter Speicherplätze der ersten beiden Blöcke,
Fig. 4 schematisch die Folge der Informationen beim Auslesen aus dem Datenträger,
Fig. 5 die Folge der Informationen beim Einschreiben in den Datenträger.

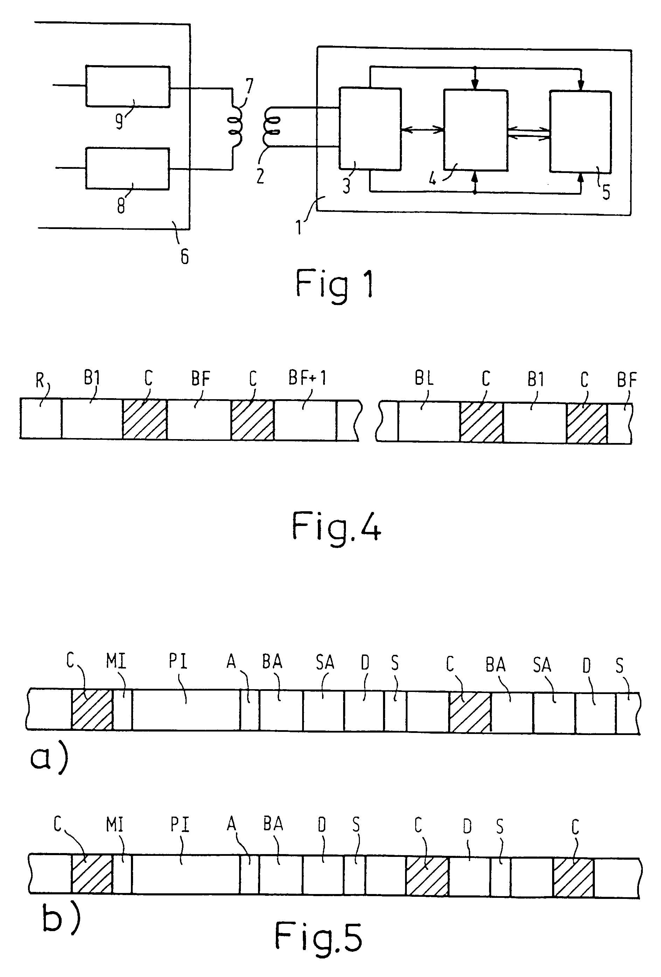

In Fig. 1 enthält ein Datenträger 1 für kontaktlose Datenübertragung eine Spule 2, über die nicht nur Daten, sondern auch Energie zum Datenträger 1 übertragen werden. Die Spule 2 ist mit einer Schnittstellenschaltung 3 verbunden, die aus der empfangenen Energie Versorgungsspannungen für die Elemente 4 und 5 gewinnt und außerdem die empfangenen Daten rekonstruiert und der Zugriffsteuerung 4 zuführt sowie von dieser ausgelesene Daten empfängt und zur Spule 2 überträgt. Die Art und Weise, wie die Daten auf einem Träger moduliert sind und zwischen der Spule 2 und der Spule 7 eines Terminals 6 übertragen werden, ist an sich bekannt und wird nicht näher beschrieben, da dies für die Erfindung nicht von Bedeutung ist. Die Spule 7 wird im Terminal 6 von einem Modulator 9 angesteuert und führt gegebenenfalls empfangene Daten einem Demodulator 8 zu. Die weiteren Elemente des Terminals 6 zur Verarbeitung der empfangenen Daten bzw. zur Erzeugung der auszusendenden Daten sind ebenfalls nicht näher angegeben.

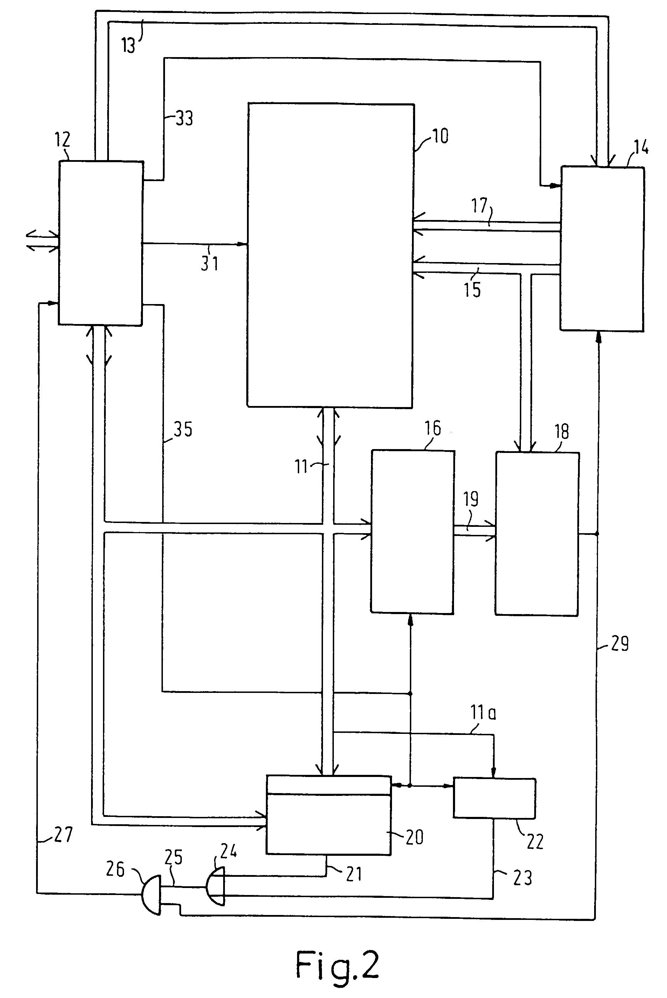

Im Datenträger 1 steuert die Zugriffsteuerung 4 das Auslesen von Daten aus dem Speicher 5 sowie das Einschreiben von Daten darin. Einige wesentliche Elemente der Zugriffsteuerung 4 und deren Verbindungen untereinander sind in Fig. 2 dargestellt und werden nachstehend näher erläutert. Dabei bezeichnen Doppellinien Verbindungen, über die insbesondere Daten und Adressen bitparallel übertragen werden.

Ein Speicher 10, der in Fig. 2 ebenfalls dargestellt ist und im wesentlichen dem Speicher 5 in Fig. 1 entspricht, wird von einer Adressieranordnung 14 angesteuert. Dies erfolgt über eine Mehrbit-Verbindung 15, über die ein Block von Speicherplätzen im Speicher 10 ausgewählt wird, sowie über die Mehrbit-Verbindung 17, die innerhalb dieses ausgewählten Blockes einen Speicherplatz für ein Mehrbit-Datenwort auswählt. Die ausgelesenen bzw. einzuschreibenden Datenwörter werden über die Verbindung 11 im wesentlichen mit einer Steueranordnung 12 ausgetauscht.

Die Steueranordnung 12 steht mit der Schnittstellenschaltung 3 in Fig. 1 in Verbindung und tauscht mit dieser Daten aus. Wenn die von der Steueranordnung 12 empfangenen Daten beispielsweise Adressen für nachfolgend einzuschreibende Daten darstellen, werden diese über die Verbindung 13 der Adressieranordnung 14 zugeführt, wobei über die Leitung 33 entsprechende Steuersignale übertragen werden. Wenn dann nachfolgend einzuschreibende Daten eintreffen, führt die Steueranordnung 12 über die Verbindung 11 dem Dateneingang des Speichers 10 die einzuschreibenden Daten zu und gibt außerdem über die Leitung 31 ein Schreibsignal an den Speicher 10 ab, jedoch nur, wenn über die Leitung 27 ein Freigabesignal zum Schreiben eintrifft.

Zur Erzeugung dieses Freigabesignals auf der Leitung 27 ist es zunächst erforderlich, zumindest bestimmte Blöcke aus dem Speicher 10 auszulesen. Die Anordnung der Information in diesen Blöcken wird später erläutert werden. Hier sei nur so viel bemerkt, daß diese Blöcke das Paßwort, das Modusbit sowie die Sperrinformation für das Schreiben und das Lesen enthalten.

Diese Informationen erscheinen nacheinander auf der Verbindung 11. Durch Steuerung über die Leitung 35 von der Steueranordnung 12 wird das Paßwort in ein Register eines Vergleichers 20 eingeschrieben, das Modusbit wird aus der Verbindung 11 von der entsprechenden Bitleitung über die Leitung 11a abgezweigt und einem Register 22 zugeführt, und die Sperrinformation für das Schreiben und das Lesen werden einem Register 16 zugeführt und dort gespeichert.

Die gespeicherte Sperrinformation wird über die Verbindung 19 einem Vergleicher 18 zugeführt, der diese Sperrinformation mit der von der Adressieranordnung 14 gelieferten Blockadresse auf der Verbindung 15 vergleicht. Wenn der betreffende Block gegen Schreiben nicht gesperrt ist, erzeugt der Vergleicher 18 auf der Leitung 29 ein Signal, das dem einen Eingang des UND-Gliedes 26 zugeführt wird. Wenn der Wert des im Register 22 gespeicherten Modusbits angibt, daß kein vollständiges Paßwort zugeführt werden muß, um in den Speicher einschreiben zu können, gibt das Register 22 auf der Leitung 23 ein Signal ab, das über das ODER-Glied 24 und die Leitung 25 auf den anderen Eingang des UND-Gliedes 26 führt, so daß damit auf der Leitung 27 ein Freigabesignal erscheint. Wenn das Modusbit jedoch den anderen binären Wert hat, muß vor dem Schreiben dem Datenträger und damit der Steueranordnung 12 die richtige Paßinformation zugeführt werden, und die Steueranordnung 12 führt diese dann über die Verbindung 11 dem Vergleicher 20 zu, wo sie mit dem im Register gespeicherten Paßwort verglichen wird. Bei Übereinstimmung erscheint am Ausgang 21 ein Signal, das über das ODER-Glied 24 und die Leitung 25 dem anderen Eingang des UND-Gliedes 26 zugeführt wird und damit ein Freigabesignal auf der Leitung 27 erzeugt. Zweckmäßig ist, daß die Paßinformation nur einmalig nach dem Koppeln des Datenträgers mit dem Terminal zugeführt wird und das vom Vergleicher erzeugte Vergleichsergebnis gespeichert wird, bis der Schreibvorgang beispielsweise für mehrere Blöcke beendet ist oder auch bis der Datenträger wieder vom Terminal entfernt wird, so daß auf der Leitung 21 ein Dauersignal vorhanden ist.

Die Sperrinformation für das Lesen besteht in diesem Beispiel aus der Angabe des ersten und des letzten Blocks, die für das Lesen freigegeben sind. Diese Information wird über die Verbindung 19 dem Vergleicher 18 zugeführt, und wenn die von der Adressieranordnung 14 erzeugte Blockadresse außerhalb dieses zum Lesen freigegebenen Bereichs liegt, wird die Adressieranordnung weitergeschaltet, bis der erste zum Lesen freigegebene Block erreicht wird. Dieser und die folgenden Blöcke werden dann nacheinander ausgelesen und über die Verbindung 11 und die Steueranordnung nach außen abgegeben, bis der letzte zum Lesen freigegebene Block erreicht ist.

Die Steueranordnung 12 kann auch aus einem Microprozessor bestehen. In diesem Falle ist es zweckmäßig, daß die übrigen in Fig. 2 dargestellten Elemente in diesem Microprozessor enthalten sind, so daß sich ein einfacher Aufbau ergibt. Dabei können einige Elemente wie z.B. die Vergleicher nur einmal vorhanden sein und für verschiedene Funktionen programmgesteuert mehrfach ausgenutzt werden.

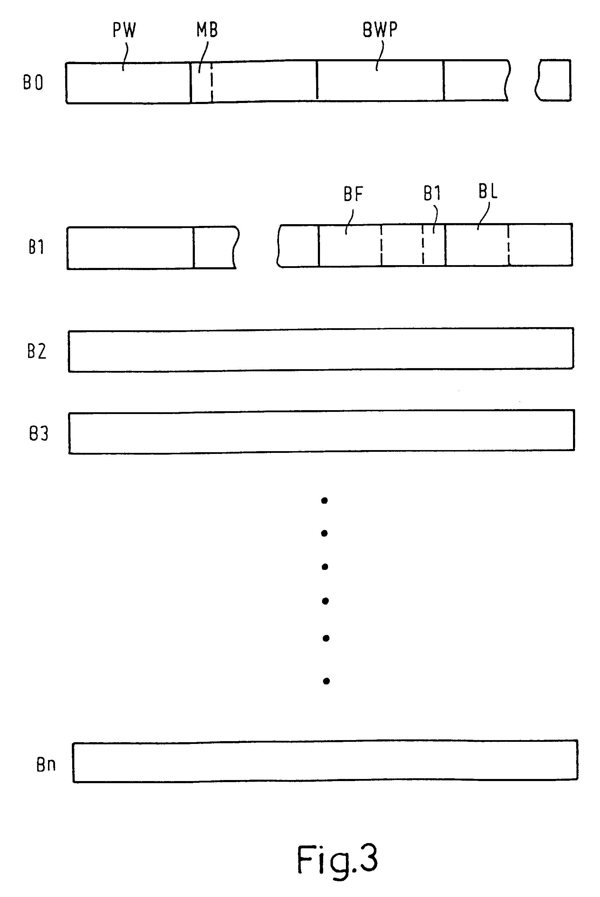

Fig. 3 zeigt den logischen Aufbau des Speichers 10 in Fig. 2. Der gesamte Adressenraum des Speichers ist in eine Anzahl Blöcke B0 bis Bn eingeteilt, wobei der Einfachheit halber nachfolgend acht Blöcke angenommen werden. Diese Blöcke werden über die Verbindung 15 in Fig. 2 adressiert.

Jeder Block enthält eine Anzahl Speicherstellen für je ein Datenwort mit beispielsweise acht Bit. Im beschriebenen Beispiel sind 15 Speicherplätze je Block vorhanden, und diese werden über die Verbindung 17 in Fig. 2 adressiert.

Der Block B0 enthält am Anfang das Paßwort PW, das mehrere Speicherstellen belegt, in der nachfolgenden Speicherstelle das Modusbit MB und in der danach folgenden Speicherstelle die Schreib-Sperrinformation BWP. Diese Sperrinformation belegt für jeden Block ein bestimmtes Bit, denn die acht Bit des Speicherworts BWP können eindeutig jeweils einem der acht Blöcke zugeordnet werden. Wenn ein Bit beispielsweise den binären Wert "1" hat, ist der zugeordnete Block gegen Schreiben gesperrt. Da dem Block B0 ebenfalls ein Bit zugeordnet ist, kann auch dieser Block gesperrt werden, was dazu führt, daß nicht nur das Paßwort und das Modusbit danach unveränderbar sind, sondern daß auch die Aufteilung des gesamten Speichers in beschreibbare und schreibgeschützte Blöcke unveränderbar ist. Die schreibgeschützten Blöcke sind damit praktisch zu Festwertspeichern geworden, und ihr momentaner Inhalt ist quasi eingefroren. Die weiteren Speicherplätze des Blocks B0 können für beliebige Zwecke verwendet werden, die vom Anwendungsfall abhängen.

Im Block B1 sind in den letzten beiden Speicherplätzen die Informationen gespeichert, die angeben, welche Blöcke gegen das Auslesen nach außerhalb des Datenträgers gesperrt sind. Dies geschieht in der Weise, daß in einem Teil BF des vorletzten Speicherplatzes eine Blocknummer angegeben ist, die den ersten auslesbaren Block angibt, und in einem Teil BL des letzten Speicherplatzes ist die Nummer des letzten auslesbaren Blockes angegeben. Ferner gibt im vorletzten Speicherplatz ein Bit B1 an, ob der Block B1 zusätzlich ausgelesen werden soll oder nicht.

Die Tatsache, daß die auslesbaren Blöcke zusammenhängend bzw. aufeinanderfolgend sind, stellt tatsächlich keine Einschränkung dar, denn beim Schreiben kann die Zuordnung der einzuschreibenden Information zu den einzelnen Blöcken zunächst frei gewählt werden, bevor einzelne Blöcke gegen Überschreiben gesperrt werden. So kann der lesbare Bereich der Blöcke schreibgesperrte Blöcke oder nicht schreibgesperrte Blöcke in beliebiger Kombination umfassen.

Es ist in den meisten Fällen zweckmäßig, den Block B1 nicht gegen Überschreiben zu sperren, indem das zugehörige Bit im Speicherwort BWP im Block B0 unabhängig vom Inhalt nicht ausgewertet wird. Wenn der Block B1 nämlich nicht schreibgeschützt ist, können ohne Kenntnis des Paßwortes PW nur die Blöcke ausgelesen werden, die durch den Inhalt der beiden letzten Speicherplätze des Blockes B1 angegeben sind, jedoch kann bei Kenntnis des Paßwortes PW dieser Inhalt überschrieben werden, so daß dann alle Blöcke auslesbar sind. Wenn jedoch die Blöcke B0 und B1 beide gegen Überschreiben geschützt wären, könnte der Inhalt der Blöcke, die außerhalb des Bereichs zwischen den Blöcken BF und BL bzw. B1 liegen, niemals mehr von außerhalb des Datenträgers gelesen werden.

Die Lage der Speicherplätze für das Paßwort PW, das Modusbit MB sowie die Sperrinformationen BWP sowie BF und BL und B1 muß selbstverständlich in der Steueranordnung 12 in Fig. 2 enthalten sein. Die übrigen Speicherplätze und die übrigen Blöcke können vom Anwender ansonsten beliebig verwendet werden.

Wenn der Datenträger 1 in Fig. 1 mit dem Terminal 6 gekoppelt wird, versetzt die Zugriffsteuerung 4 bzw. die Steueranordnung 12 in Fig. 2 den Datenträger zunächst in einen Lesezustand. Die vom Datenträger 1 zum Terminal 6 übertragene Information hat dabei eine zeitliche Folge, die in Fig. 4 näher dargestellt ist.

Nach dem Koppeln des Datenträgers mit dem Terminal wird zunächst die Versorgungsspannung im Datenträger aufgebaut, und im ersten Zeitabschnitt R werden alle Schaltungen auf einen Anfangszustand zurückgesetzt. Außerdem erfolgt ein internes Lesen der Sperrinformationen der Blöcke B0 und B1. Als nächstes folgt der Inhalt des Blocks B1, wobei angenommen wird, daß das Bit B1 in diesem Block einen entsprechenden Wert hat. Danach folgen die Inhalte der im Block 1 angegebenen Blöcke BF, BF+1 und folgende bis zum letzten Block BL. Danach beginnt der Lesevorgang zyklisch wieder mit dem Block B1 usw.. Der Block B1 wird stets als erster übertragen, wenn er nicht lesegeschützt ist, so daß im Terminal dann aus der Information der beiden letzten Speicherplätze unmittelbar bekannt ist, welche Blöcke danach übertragen werden.

Zwischen der Übertragung des Inhalts jeweils eines Blocks wird eine Periode C eingeschoben, in der das Terminal dem Datenträger mitteilen kann, ob darin Daten eingeschrieben werden sollen. Dies erfolgt beispielsweise durch die Übertragung einer bestimmten Anzahl von Impulsen an einer bestimmten zeitlichen Stelle nach dem Ende der Übertragung jeweils eines Blocks. Wenn keine Impulse übertragen werden, wird der zyklische Auslesevorgang fortgesetzt. Wenn jedoch die vorgeschriebenen Impulse im Abschnitt C eintreffen, beendet der Datenträger das Auslesen und erwartet nachfolgend Informationen von dem Terminal.

Die Informationsfolge beim Einschreiben von Informationen in den Datenträger ist in Fig. 5 näher dargestellt. In der Zeile a) ist die Informationsfolge angegeben, wenn einzelne Speicherplätze bestimmter Blöcke eingeschrieben werden sollen, während in der Zeile b) die Informationsfolge für das Einschreiben eines ganzen Blocks angegeben ist.

In der Zeile a) ist angenommen, daß nach einem Übertragungsvorgang in dem darauffolgenden ersten Abschnitt C die Impulse übertragen worden sind, die den Datenträger in den Schreibzustand einstellen. Als nächstes überträgt das Terminal die Modusinformation MI zum Datenträger, die hier nur aus einem einzigen Bit bestehen möge. Diese Modusinformation wird im Datenträger mit dem Modusbit MB verglichen. Wenn diese beiden Werte nicht übereinstimmen, entstehen abhängig von diesen beiden Werten zwei verschiedene Konfliktzustände.
a) Wenn das Modusbit MB den binären Wert "1" hat, so daß der Datenträger die richtige Paßinformation benötigt, um den Schreibvorgang durchzuführen, und die Modusinformation MI hat den binären Wert "0", was bedeutet, daß das Terminal keine Paßinformation übertragen wird, bricht der Datenträger den Schreibvorgang sofort ab und geht in den Lesezustand, da dann unmittelbar erkennbar ist, daß ein ordnungsgemäßer Schreibvorgang nicht durchführbar ist. Dadurch tritt kein unnötiger Zeitverlust auf.
b) Wenn das Modusbit MB den binären Wert "0" hat, was bedeutet, daß ein Schreiben ohne Paßinformation möglich ist, und die Modusinformation MI hat den binären Wert "1", was bedeutet, daß anschließend eine Paßinformation zum Datenträger übertragen wird, so ignoriert der Datenträger diese Paßinformation und führt den Schreibvorgang mit den folgenden Informationen normal durch. Dadurch entsteht auch in diesem Konfliktfall kein unnötiger Zeitverlust außer der unnötigen Übertragung der Paßinformation.

Nach der Modusinformation MI folgt, wenn diese den binären Wert "1" hat, die Paßinformation PI. Diese wird im Datenträger, wenn das Modusbit MB den binären Wert "1" hat, mit dem Paßwort PW verglichen, und bei Übereinstimmung wird der weitere Schreibvorgang freigegeben.

Nachfolgend wird ein Anzeigebit A übertragen, das angibt, ob in einem einzelnen Speicherplatz oder in alle Speicherplätze eines Blocks eingeschrieben werden soll. Da in Zeile a) angenommen wird, daß einzelne Speicherplätze beschrieben werden sollen, folgt danach die Blockadresse BA und dann die Speicherplatzadresse SA, und danach wird das einzuschreibende Datenwort D bitweise übertragen. Danach folgt ein Sicherungsbit S, beispielsweise ein Paritätsbit, damit der Datenträger prüfen kann, ob die Adressen und das Datenwort richtig empfangen worden sind. Danach folgt ein Zeitraum ohne Übertragung, während dem das übertragene Datenwort in den Speicher des Datenträgers eingeschrieben wird.

Danach folgt wieder ein Prüfabschnitt C, in dem das Terminal durch Übertragung entsprechender Impulse bestimmen kann, ob der Datenträger im Schreibzustand bleiben oder in den Lesezustand gehen soll. Wenn keine Impulse übertragen werden, geht der Datenträger in den Lesezustand, wobei zunächst der zuletzt programmierte Datenblock ausgelesen wird und dann ein Auslesen entsprechend dem in Fig. 4 angegebenen Schema erfolgt. Dabei kann der Datenträger jedoch auch unmittelbar nach dem Auslesen des zuletzt programmierten Blocks wieder in den Schreibzustand geschaltet werden, so daß ein Einschreiben und unmittelbar darauf folgendes Überprüfen der eingeschriebenen Daten mehrfach hintereinander möglich ist.

In der Zeile b) ist angenommen, daß die Speicherplätze eines ganzen Blocks aufeinanderfolgend eingeschrieben werden sollen. Nach der Übertragung der Modusinformation MI und gegebenenfalls der Paßinformation PI folgt das Anzeigebit A mit nunmehr einem anderen Wert, und dann folgt eine Blockadresse BA zur Angabe des Blocks, dessen Speicherplätze aufeinanderfolgend eingeschrieben werden sollen, und dann folgt das Datenwort D für den ersten Speicherplatz, gefolgt von der Sicherungsinformation S. Nach dem Zeitabschnitt für das Einschreiben dieses Datenwortes in den Speicher des Datenträgers folgt wieder ein Prüfabschnitt C, in dem der Datenträger wieder in den Lesezustand zurückgeschaltet werden kann. Zur Fortsetzung des Schreibvorganges im Normalfall werden in diesem Abschnitt wieder die Impulse zur Einstellung des Datenträgers in den Schreibzustand gesendet, und danach folgt unmittelbar das Datenwort D für den zweiten Speicherplatz des anfangs adressierten Blocks, dessen Adresse nun nicht nochmals übertragen werden muß. Danach folgt wieder die Sicherungsinformation S und der Zeitabschnitt zum Einschreiben des Datenwortes, usw., bis alle Datenwörter dieses Blocks übertragen und eingeschrieben worden sind.

Wenn beim Schreibvorgang die Blockadresse BA einen Block adressiert, der gegen Überschreiben gesperrt ist, und zwar sowohl bei dem Schreiben einzelner Speicherwörter gemäß Zeile a) oder beim Schreiben eines ganzen Blocks gemäß Zeile b), bricht der Datenträger den Schreibvorgang unmittelbar ab und geht in den Lesezustand, bei dem aufeinanderfolgend nicht gegen Lesen gesperrte Blöcke übertragen werden mit jeweils einem Prüfabschnitt C dazwischen. Ebenso geht der Datenträger unmittelbar in den Lesezustand, wenn aufgrund der Sicherungsinformation festgestellt wird, daß eine Adresse oder ein Datenwort falsch empfangen worden ist. Auf diese Weise erfolgen bei allen Informationen in allen Zuständen jeweils eindeutige Aktionen, die insbesondere das Terminal in die Lage versetzen, unmittelbar zweckmäßig zu reagieren. Das Terminal kann insbesondere den Zeitabschnitt, in dem der Datenträger bei korrekter Funktion ein Datenwort in einen Speicherplatz einschreibt, darauf überwachen, ob der Datenträger seinerseits Daten aussendet. Wenn dies der Fall ist, erfährt das Terminal dadurch, daß ein Schreibvorgang abgebrochen und ein übertragenes Datenwort nicht eingeschrieben worden ist. Durch entsprechende Impulse in dem nachfolgenden Prüfabschnitt C kann das Terminal dann jeweils bestimmen, wie die Übertragung fortgeführt werden soll, beispielsweise ob die Übertragung eines Datenwortes zum Einschreiben wiederholt werden soll oder ob zunächst ein vollständiges Auslesen aller Blöcke aus dem Datenträger abgewartet werden soll.

## Patentansprüche

1. Anordnung zum Datenaustausch zwischen einem Terminal (6) und einem damit verbundenen Datenträger (1), der einen in mehrere Blöcke mit je mehreren Speicherplätzen unterteilten Schreib-Lese-Speicher (5; 10) und ferner Steuer- und Adressierungsanordnungen (4; 12, 14) und Sperranordnungen (16, 18, 20, 22, 24, 26) enthält, die das Auslesen aus dem Speicher und/oder das Einschreiben in den Speicher in Abhängigkeit von gespeicherten, jeweils einem Block zugeordneten getrennten Lese- und Schreib-Sperrinformationen verhindern bzw. freigeben, wobei der Datenträger vor einem Speicherzugriff zunächst mit dem Terminal gekoppelt wird, das den Datenaustausch mit dem Datenträger in Zusammenwirkung mit diesem steuert,
dadurch gekennzeichnet, daß erste Speicherplätze eines Blocks für blockweise Schreib-Sperrinformationen (BWP), zweite Speicherplätze eines Blocks für blockweise Lese-Sperrinformationen (BF, BL, B1) und dritte Speicherplätze eines Blocks für ein Paßwort (PW) vorgesehen sind und daß das Schreiben in nicht gesperrte Blöcke abhängig von einem in einem vierten Speicherplatz im Speicher gespeicherten Modusbit (MB) nach Übertragung einer Paßinformation zum Datenträger und erfolgreichem Vergleich dieser übertragenen Paßinformation mit einem gespeicherten Paßwort (PW) freigegeben wird.

2. Anordnung nach Anspruch 1,
dadurch gekennzeichnet, daß die ersten Speicherplätze in einem ersten Block (B0) und die zweiten Speicherplätze in einem anderen, zweiten Block (B1) vorgesehen sind.

3. Anordnung nach Anspruch 2,
dadurch gekennzeichnet, daß in den zweiten Speicherplätzen die Nummer eines ersten nicht für das Lesen gesperrten Blocks (BF) und die Nummer eines letzten nicht für das Lesen gesperrten Blocks (BL) gespeichert sind und diese Blocks sowie die dazwischen liegenden Blocks bei einem Lesevorgang ausgelesen werden.

4. Anordnung nach Anspruch 2 oder 3,
dadurch gekennzeichnet, daß die dritten Speicherplätze für das Paßwort (PW) und der vierte Speicherplatz für das Modusbit (MB) im ersten Block (B0) vorgesehen sind.

5. Anordnung nach einem der vorhergehenden Ansprüche,
dadurch gekennzeichnet, daß die Steueranordnungen (4; 12, 14) nach dem Koppeln des Datenträgers (1) mit dem Terminal (6) zunächst den Inhalt nicht für das Lesen gesperrter Blöcke (BF-BL) zyklisch wiederholt lesen und zum Terminal übertragen und nach der Übertragung jeweils eines Blockes eine Pause einfügen, in der das Terminal bei Vorliegen von in den Datenträger einzuschreibenden Daten ein vorgegebenes Schreibanforderungssignal zum Datenträger überträgt, wodurch die Steueranordnungen (4; 12, 14) den Lese- und Übertragungsvorgang vom Datenträger zum Terminal beenden und den Datenträger zum Empfang von einzuschreibenden Daten vorbereiten.

6. Anordnung nach einem der vorhergehenden Ansprüche,
dadurch gekennzeichnet, daß die Steueranordnungen (4; 12, 14) vor einem Schreibvorgang und vor einem Lesevorgang zunächst die vollständige Schreib-Sperrinformation (BWP) bzw. die vollständige Lese-Sperrinformation (BF, B1, BL) sowie das Modusbit (MB) aus dem Speicher (5; 10) auslesen.

7. Anordnung nach Anspruch 6,
dadurch gekennzeichnet, daß die Sperranordnungen (16, 18, 20, 22, 24, 26) bei dem einen binären Wert des ausgelesenen Modusbits (MB) das Schreiben in nicht gesperrte Blöcke unabhängig von der übertragenen Paßinformation freigeben.

8. Anordnung nach Anspruch 7,
dadurch gekennzeichnet, daß das Terminal (6) zu Beginn eines Schreibvorgangs im Speicher (5; 10) des Datenträgers (1) zunächst eine Modusinformation zum Datenträger (1) überträgt und die Sperranordnungen (16, 18, 20, 22, 24, 26) diese dort mit dem Modusbit (MB) vergleichen und bei Nichtübereinstimmung im Fall, daß das Modusbit den einen binären Wert und die Modusinformation den anderen binären Wert hat, eine nachfolgend übertragene Paßinformation in dem Datenträger nicht auswerten und in dem Fall, daß das Modusbit den anderen binären Wert und die Modusinformation den einen binären Wert hat, die Steueranordnungen (4; 12, 14) ansteuern, um den Schreibvorgang unmittelbar abzubrechen.

9. Anordnung nach Anspruch 7 oder 8,
dadurch gekennzeichnet, daß die Sperranordnungen (16, 18, 20, 22, 24, 26) bei dem anderen Wert des Modusbits und der Modusinformation bei Nichtübereinstimmung der Paßinformation und des gespeicherten Paßwortes (PW) die Steueranordnungen (4; 12, 14) ansteuern, um den Schreibvorgang unmittelbar abzubrechen.

10. Anordnung nach einem der Ansprüche 1 bis 9,
dadurch gekennzeichnet, daß im Datenträger (1) die Adressieranordnung (14) jeweils einen Block von Speicherplätzen im Speicher (10) sowie innerhalb eines Blocks einen Speicherplatz adressiert, daß die Sperranordnungen ein Register (16), das den Inhalt vorgegebener erster Speicherplätze eines Blocks und den Inhalt vorgegebener zweiter Speicherplätze eines Blocks aufnimmt, einen ersten Vergleicher (18), der die von der Adressieranordnung (14) abgegebene Blockadresse mit dem Inhalt des Registers (16) vergleicht und abhängig vom Vergleichsergebnis ein erstes Ausgangssignal erzeugt, das das Lesen eines Blocks unterdrückt bzw. freigibt und für das Schreiben in einem Block verwendet wird, und einen zweiten Vergleicher (20) umfassen, der ein aus dritten Speicherplätzen eines Blocks ausgelesenes Paßwort mit einem vom Terminal (6) zugeführtes Paßwort vergleicht und abhängig vom Vergleichsergebnis ein zweites Ausgangssignal erzeugt, daß ein zweites Register (22) vorgesehen ist, das den Inhalt eines vierten Speicherplatzes aufnimmt und ein drittes Ausgangssignal (23) erzeugt, und daß die Steueranordnung (12) das erste, zweite und dritte Ausgangssignal empfängt und davon abhängig das Einschreiben von Information in Blöcke des Speichers (10) sperrt bzw. freigibt.

11. Datenträger zum Koppeln mit einem Terminal,
dadurch gekennzeichnet, daß darin Speicher (5; 10), Steuer- und Adressieranordnungen (4; 12, 14) und Sperranordnungen (16, 18, 20, 22, 24, 26) gemäß einem der Ansprüche 1 bis 10 enthalten sind.

12. Integrierte Schaltung zum Einbau in einen Datenträger nach Anspruch 11,
dadurch gekennzeichnet, daß darin Speicher (5; 10), Steuer- und Adressieranordnungen (4; 12, 14) und Sperranordnungen (16, 18, 20, 22, 24, 26) gemäß einem der Ansprüche 1 bis 10 enthalten sind.

## Claims

1. An arrangement for exchanging data between a terminal (6) and a data carrier (1) which is connected thereto and includes a read/write memory (5; 10) which is subdivided into a plurality of blocks, each of which comprises a plurality of memory locations, and also includes control and addressing arrangements (4; 12, 14) and inhibit arrangements (16, 18, 20, 22, 24, 26) which inhibit or enable the reading from the memory and/or the writing into the memory in dependence on stored, separate read and write inhibit information associated with a respective block, the data carrier first being coupled to the terminal before a memory access, said terminal controlling the data exchange with the data carrier in co-operation therewith,
characterized in that there are provided first memory locations of a block for block-wise write-inhibit information (BWP), second memory locations of a block for block-wise read-inhibit information (BF, BL, B1) and third memory locations of a block for a password (PW), and that the writing in non-inhibited blocks is enabled in dependence on a mode bit (MB), stored in a fourth memory location in the memory, after transmission of pass information to the data carrier and successful comparison of the transmitted pass information with a stored password (PW).

2. An arrangement as claimed in Claim 1,
characterized in that the first memory locations are provided in a first block (B0) and the second memory locations are provided in another, second block (B1).

3. An arrangement as claimed in Claim 2,
characterized in that the number of a first block (BF) which is not inhibited from reading and the number of a last block (BL) which is not inhibited from reading are stored in the second memory locations, said blocks, as well as the blocks situated therebetween, being read during a read operation.

4. An arrangement as claimed in claim 2 or 3,
characterized in that the third memory locations for the password (PW) and the fourth memory location for the mode bit (MB) are provided in the first block (BO).

5. An arrangement as claimed in one of the preceding Claims,
characterized in that, after the coupling of the data carrier (1) to the terminal (6), the control arrangements (4; 12, 14) first read, in a cyclically repetitive manner, the content of blocks (BF-BL) not inhibited from reading so as to transfer this content to the terminal and, insert a respective pause after the transfer of each block, the terminal transmitting a predetermined write request signal to the data carrier during said pause if data to be written into the data carrier is present, so that the control arrangements (4; 12, 14) terminate the read and transfer operation from the data carrier to the terminal and prepare the data carrier for the reception of data to be written.

6. An arrangement as claimed in one of the preceding Claims,
characterized in that, prior to a write operation and prior to a read operation, the control arrangements (4; 12, 14) first read the complete write inhibit information (BWP), or the complete read inhibit information (BF, B1, BL), as well as the mode bit (MB) from the memory (5; 10).

7. An arrangement as claimed in Claim 6,
characterized in that in the case of the one binary value of the mode bit (MB) read the inhibit arrangements (16, 18, 20, 22, 24, 26) enable the writing in non-inhibited blocks, irrespective of the transferred pass information.

8. An arrangement as claimed in claim 7,
characterized in that the terminal (6) first transfers mode information to the data carrier (1) at the beginning of a write operation in the memory (5; 10) of the data carrier (1), which mode information is compared therein with the mode bit (MB) and by the inhibit arrangements (16, 18, 20, 22, 24, 26) in the case of non-correspondence, when the mode bid has the one binary value and the mode information has the other binary value, pass information subsequently transferred to the data carrier is not evaluated and, in the case where the mode bit has the other binary value and the mode information has the one binary value, the control arrangements (4; 12, 14) are controlled so as to terminate the write operation immediately.

9. An arrangement as claimed in Claim 7 or 8,
characterized in that when the mode bit and the mode information have the other value, the inhibit arrangements (16, 18, 20, 22, 24, 26) control, in the case of non-correspondence of the pass information and the stored password (PW), the control arrangements (4; 12, 14) so as to interrupt the write operation immediately.

10. An arrangement as claimed in one of the Claims 1 to 9,
characterized in that the addressing device (14) in the data carrier (1) addresses a respective block of memory locations in the memory (10) as well as a memory location within a block, that the inhibit arrangements include a register (16) which stores the content of predetermined first memory locations of a block and the content of predetermined second memory locations of a block, a first comparator (18) which compares the block address supplied by the addressing device (14) with the content of the register (16) and generates, in dependence on the comparison result, a first output signal which inhibits or enables the reading of a block and is used for the writing in a block, and a second comparator (20) which compares a password read from third memory locations of a block with a password supplied by the terminal (6) and generates, in dependence on the comparison result, a second output signal, that there is provided a second register (22) which stores the content of a fourth memory location and generates a third output signal (23), and that the control arrangement (12) receives the first, the second and the third output signal and inhibits or enables the writing of information in blocks of the memory (10) in dependence thereon.

11. A data carrier to be coupled to a terminal,
characterized in that it includes memories (5; 10), control and addressing arrangements (4; 12, 14) and inhibit arrangements (16, 18, 20, 22, 24, 26) as claimed in one of the Claims 1 to 10.

12. An integrated circuit to be built into a data carrier as claimed in Claim 11,
characterized in that it includes memories (5; 10), control and addressing arrangements (4; 12, 14) and inhibit arrangements (16, 18, 20, 22, 24, 26) as claimed in one of the Claims 1 to 10.

## Revendications

1. Dispositif d'échange de données entre un terminal (6) et un support de données (1) relié à celui-ci qui contient une mémoire vive (5; 10) subdivisée en plusieurs blocs avec respectivement plusieurs emplacements de mémoire et, par ailleurs, des dispositifs de commande et d'adressage (4; 12, 14) et des dispositifs de protection (16, 18, 20, 22, 24, 26) qui empêchent ou autorisent la lecture de la mémoire et/ou l'enregistrement dans la mémoire en fonction d'informations de protection contre la lecture et l'écriture séparées affectées respectivement à un bloc et enregistrées, le support de données étant d'abord accouplé avant un accès à la mémoire au terminal qui commande en collaboration avec celui-ci l'échange de données avec le support de données, caractérisé en ce que des premiers emplacements de mémoire d'un bloc pour des informations de protection contre l'écriture (BWP) en bloc, des deuxièmes emplacements de mémoire d'un bloc pour les informations de protection contre la lecture en bloc (BF, BL, B1) et des troisièmes emplacements de mémoire d'un bloc pour un mot de passe (PW) sont prévus et que l'écriture dans des blocs non protégés est autorisée en fonction d'un bit de mode (MB) enregistré dans un quatrième emplacement de mémoire dans la mémoire après la transmission d'une information de passe vers le support de données et comparaison réussie de cette information de passe transmise avec un mot de passe (PW) enregistré.

2. Dispositif selon la revendication 1, caractérisé en ce que les premiers emplacements de mémoire sont prévus dans un premier bloc (B0) et que les deuxièmes emplacements de mémoire sont prévus dans un autre deuxième bloc (B1).

3. Dispositif selon la revendication 2, caractérisé en ce que, dans les deuxièmes emplacements de mémoire, les numéros d'un premier bloc (BF) non protégé contre l'écriture et les numéros d'un dernier bloc (BL) non protégé contre l'écriture sont enregistrés et ces blocs ainsi que les blocs intermédiaires sont lus lors d'une opération de lecture.

4. Dispositif selon l'une des revendications 2 ou 3, caractérisé en ce que les troisièmes emplacements de mémoire pour le mot de passe (PW) et le quatrième emplacement de mémoire pour le bit de mode (MB) sont prévus dans le premier bloc (B0).

5. Dispositif selon l'une des revendications précédentes, caractérisé en ce que les dispositifs de commande (4; 12, 14) lisent d'abord de manière cyclique et répétée le contenu de blocs (BF-BL) non protégés contre la lecture et les transmettent au terminal après l'accouplement du support de données (1) avec le terminal (6) et, après la transmission d'un bloc respectif, insèrent une pause dans laquelle le terminal transmet un signal de demande d'écriture prédéterminé au support de données en cas de présence de données à enregistrer dans le support de mémoire, si bien que les dispositifs de commande (4; 12, 14) mettent fin à la procédure de lecture et de transmission du support de données au terminal et préparent le support de données à la réception de données à enregistrer.

6. Dispositif selon l'une des revendications précédentes, caractérisé en ce que les dispositifs de commande (4; 12, 14) lisent d'abord l'information de protection contre l'écriture complète (BWP) ou l'information de protection contre la lecture complète (BF, B1, BL) ainsi que le bit de mode (MB) de la mémoire (5; 10) avant une opération d'écriture et avant une opération de lecture.

7. Dispositif selon la revendication 6, caractérisé en ce que les dispositifs de protection (16, 18, 20, 22, 24, 26) autorisent l'écriture dans des blocs non protégés indépendamment de l'information de passe transmise pour une valeur binaire du bit de mode (MB) lu.

8. Dispositif selon la revendication 7, caractérisé en ce que le terminal (6) transmet d'abord une information de mode au support de données (1) au début d'une opération d'écriture dans la mémoire (5; 10) du support de données (1) et les dispositifs de protection (16, 18, 20, 22, 24, 26) les y comparent avec le bit de mode (MB) et, en cas de non-concordance, lorsque le bit de mode a une valeur binaire et l'information de mode l'autre valeur binaire, n'évaluent pas une information de passe transmise ultérieurement dans le support de données et, au cas où le bit de mode a l'autre valeur binaire et l'information de mode la première, excitent les dispositifs de commande (4; 12, 14) pour interrompre immédiatement l'opération d'écriture.

9. Dispositif selon la revendication 7 ou 8, caractérisé en ce que les dispositifs de protection (16, 18, 20, 22, 24, 26) excitent les dispositifs de commande (4; 12, 14) pour l'autre valeur du bit de mode et de l'information de mode en cas de non-concordance de l'information de passe et du mot de passe enregistré (PW) pour interrompre immédiatement l'opération d'écriture.

10. Dispositif selon l'une des revendications 1 à 9, caractérisé en ce que, dans le support de données (1), le dispositif d'adressage (14) adresse respectivement un bloc d'emplacements de mémoire dans la mémoire (10) ainsi qu'un emplacement de mémoire à l'intérieur d'un bloc, que les dispositifs de protection comprennent un registre (16) qui enregistre le contenu des premiers emplacements de mémoire prédéterminés d'un bloc et le contenu de deuxièmes emplacements de mémoire prédéterminés d'un bloc, un premier comparateur (18) qui compare l'adresse de bloc délivrée par le dispositif d'adressage (14) avec le contenu du registre (16) et, en fonction du résultat de la comparaison, produit un premier signal de sortie qui autorise ou bloque la lecture d'un bloc et est utilisé pour l'écriture dans un bloc, et un deuxième comparateur (20) qui compare un mot de passe lu à partir de troisièmes emplacements de mémoire d'un bloc avec un mot de passe amené par le terminal (6) et, en fonction du résultat de la comparaison, délivre un deuxième signal de sortie, qu'un deuxième registre (22) est prévu et enregistre le contenu d'un quatrième emplacement de mémoire et produit un troisième signal de sortie (23) et que le dispositif de commande (12) reçoit les premier, deuxième et troisième signaux de sortie et, en fonction de ceux-ci, bloque ou autorise l'enregistrement d'information dans des blocs de mémoire (10).

11. Support de données pour l'accouplement à un terminal, caractérisé en ce qu'il contient des mémoires (5; 10), des dispositifs de commande et d'adressage (4; 12, 14) et des dispositifs de protection (16, 18, 20, 22, 24, 26) conformément à l'une des revendications 1 à 10.

12. Circuit intégré à monter dans un support de données selon la revendication 11, caractérisé en ce qu'il contient des mémoires (5; 10), des dispositifs de commande et d'adressage (4; 12, 14) et des dispositifs de protection (16, 18, 20, 22, 24, 26) conformément à l'une des revendications 1 à 10.
